# EUROPÄISCHE PATENTSCHRIFT

(11) **EP 1 364 735 B1**
(45) Veröffentlichungstag und Bekanntmachung des Hinweises auf die Patenterteilung: **01.07.2009**
(21) Anmeldenummer: 03009372.8
(22) Anmeldetag: 25.04.2003
(51) Int. Cl.: B23D 77/10

(54) **Werkzeug zur spanenden Bearbeitung von Werkstücken**
Tool for machining by chip-forming of workpieces
Outil d' usinage par enlèvement de copeaux des pièces

(30) Priorität: 23.05.2002 DE 10223687; 16.08.2002 DE 10237680
(43) Veröffentlichungstag der Anmeldung: 26.11.2003
(73) Patentinhaber: MAPAL Fabrik für Präzisionswerkzeuge Dr. Kress KG, D-73431 Aalen (DE)
(72) Erfinder:
(74) Vertreter: Gleiss, Alf-Olav

(56) Entgegenhaltungen:
- FR-A- 1 018 990
- US-A- 2 093 742
- US-A- 2 093 986

## Beschreibung

Die Erfindung betrifft ein Werkzeug zur spanenden Bearbeitung von Werkstücken gemäß Oberbegriff des Anspruchs 1.

Werkzeuge der hier angesprochenen Art sind zum Beispiel aus FR 1 018 990, US 2,093,742 und US 2,093,986 bekannt. Sie dienen dazu, mit einer Schneide Späne von einem Werkstück abzutragen, beispielsweise bei der Oberflächenbearbeitung von Bohrungen. In der Regel wird das Werkzeug in Rotation versetzt, um eine Relativbewegung zwischen Schneide und der zu bearbeitenden Werkstückoberfläche zu erzeugen und um Späne abzutragen. Es ist jedoch auch möglich, das Werkstück in Rotation zu versetzten und das Werkzeug drehfest einzuspannen.

Es sind auch Werkzeuge bekannt, die eine Einstellvorrichtung aufweisen, mit deren Hilfe die Position der Schneide des Werkzeugs gegenüber dessen Mittelachse eingestellt werden kann. Die bekannten Werkzeuge sind beispielsweise als Schneidenringe ausgebildet, aber auch beispielsweise als Monoblock-Werkzeug. In beiden Fällen weist die Einstellvorrichtung ein als Kegel ausgebildetes Einstellelement auf, das Teil eines Keilgetriebes ist: Bei einer Verlagerung des Kegels kann der Schneidenring beziehungsweise der Grundkörper des Monoblock-Werkzeugs mehr oder weniger weit aufgeweitet werden, um die Stellung der Schneide zu variieren. Bei einer Verstellung der Schneide wird der Kegel in Richtung der Mittelachse des Werkzeugs verlagert und wirkt mit einer kegelförmigen Fläche im Schneidenring beziehungsweise im Werkzeug zusammen. Zwischen der Fläche und dem Kegel wirken hohe Reibungskräfte, so dass eine feinfühlige Verlagerung des Kegels häufig nicht möglich ist. Dadurch ist es nicht, beziehungsweise nur mit einem erhöhten Fertigungsaufwand möglich, eine exakte Einstellung zu realisieren. Überdies bedarf es hoher Einstellkräfte, um die Position des Kegels zu verändern. Es hat sich überdies herausgestellt, dass in vielen Fällen eine Verlagerung der Schneide nicht reversibel ist.

Aufgabe der Erfindung ist es daher, ein Werkzeug zu schaffen, das diese Nachteile nicht aufweist.

Zur Lösung dieser Aufgabe wird ein Werkzeug vorgeschlagen, das die in Anspruch 1 genannten Merkmale umfasst. Es zeichnet sich durch eine Einstellvorrichtung aus, die ein Einstellelement und eine dessen Biegung verändernde Stellvorrichtung umfasst. Das Einstellelement ist so im Grundkörper des Werkzeugs eingebracht, dass bei einer Veränderung der Biegung des Einstellelements der Durchmesser des Grundkörpers verändert wird, damit auch der radiale Abstand der Schneide des Werkzeugs zu dessen Mittelachse. Eine Veränderung der Biegung des Einstellelements ist sehr feinfühlig möglich. Reibungskräfte des Einstellelements selbst ergeben sich bei der Änderung der Biegung des Einstellelements nicht. Es ist überdies möglich, dass bei einer Aufweitung des Grundkörpers des Werkzeugs diese rückgängig gemacht werden kann, indem die Änderung der Biegung des Einstellelements ebenfalls rückgängig gemacht wird. Damit ist auch eine reversible Einstellung der Schneidenposition möglich.

Weitere Ausgestaltungen ergeben sich aus den Unteransprüchen.

Die Erfindung wird im Folgenden anhand der Zeichnung näher erläutert. Es zeigen:
- Figur 1: ein erstes Ausführungsbeispiel eines Werkzeugs mit einer Einstellvorrichtung, die ein konkav gebogenes Einstellelement umfasst;
- Figur 2: ein zweites Ausführungsbeispiel eines Werkzeugs mit einer Einstellvorrichtung, die ein konvex gebogenes Einstellelement umfasst;
- Figur 3: ein drittes Ausführungsbeispiel eines Werkzeugs mit einer Einstellvorrichtung, die ein ebenes Einstellelement umfasst;
- Figur 4: eine schematische Stirnansicht des Werkzeugs;
- Figur 5: eine Draufsicht auf ein Ausführungsbeispiel eines Einstellelements;
- Figuren 6 bis 8: weitere Ausführungsbeispiele eines in ein Werkzeug eingebrachten Einstellelements und
- Figur 9: ein Teil der Einstellvorrichtung.

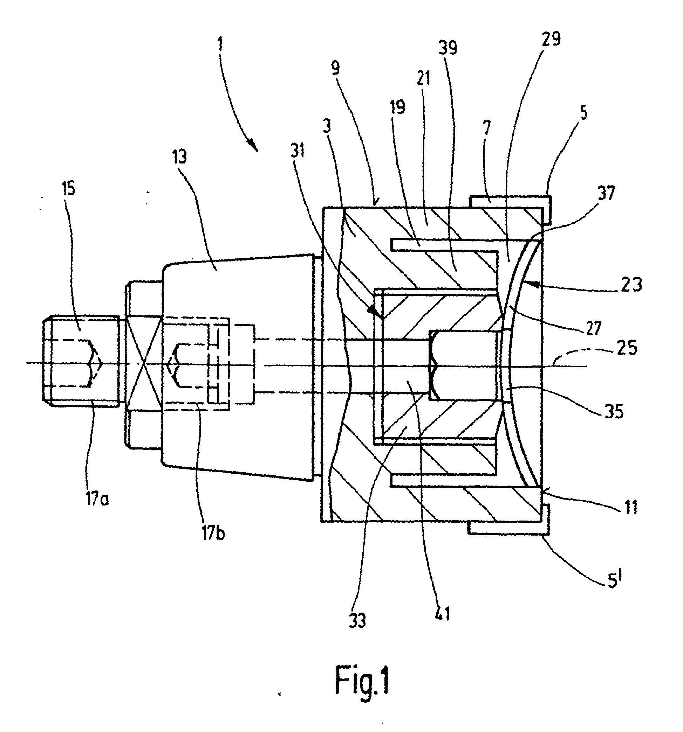

Figur 1 zeigt ein Werkzeug 1 zur spanenden Bearbeitung von Werkstücken mit einem Grundkörper 3, der mit mindestens einer geometrisch definierten Schneide 5 versehen ist, mit der Späne von einem Werkstück abgetragen werden. Die Schneide 5 kann Teil des Grundkörpers 3 sein. Bei dem hier dargestellten Ausführungsbeispiel ist die Schneide 5 Teil einer Messerplatte 7, die in den Grundkörper 3 eingesetzt ist. Die Befestigung von Messerplatten 7 an einem Grundkörper 3 eines Werkzeugs 1 ist bekannt. In der Regel werden die Messerplatten 7 in eine Nut eingesetzt, damit sie sicher gehalten werden und die bei der Bearbeitung von Werkstücken entstehenden Kräfte in den Grundkörper 3 eingeleitet werden. Die Messerplatten können im Grundkörper 3 eingelötet oder mittels bekannter Spannpratzen festgespannt werden. Es ist schließlich auch möglich, die Messerplatten unmittelbar mit einer Schraube am Grundkörper 3 zu befestigen.

In Figur 1 sind zwei gegenüberliegende Schneiden 5 und 5' dargestellt. Es ist also möglich, mehr als eine Schneide am Grundkörper 3 vorzusehen, wobei die Anzahl der Schneiden auf den Einsatzfall des Werkzeugs abgestimmt werden kann. Es ist außerdem möglich, in die Umfangsfläche 9 eine oder mehrere Führungsleisten einzusetzen, mit denen sich das Werkzeug 1 an einer Bohrungsoberfläche abstützt, wenn dieses zur Bearbeitung von Bohrungen in Werkstücken eingesetzt wird. Die Ausführung und Anordnung sowie die Befestigung von Führungsleisten sind bekannt, so dass hier nicht weiter darauf eingegangen wird.

Figur 1 zeigt deutlich, dass die Schneide 5 und die Schneide 5' über die Umfangsfläche 9 radial nach außen vorsteht. Bei dem hier dargestellten Ausführungsbeispiel stehen die Schneiden 5, 5' auch über die Stirnseite 11 des Werkzeugs 1 vor.

Das Werkzeug 1 ist hier beispielhaft mit einem kegelförmigen Ansatz 13 versehen, mit dem es an einem Werkzeughalter, einem Zwischenstück oder unmittelbar an einer Werkzeugmaschine befestigt werden kann. Hier ist eine Spannschraube 15 vorgesehen, die, wie bekannt, mit gegenläufigen Gewindeabschnitten 17a, 17b versehen ist und dazu dient, das Werkzeug 1 festzuspannen.

Der Grundkörper 3 des Werkzeugs 1 ist zumindest bereichsweise aufweitbar. Dies kann dadurch realisiert werden, dass Bereiche, insbesondere solche, in denen eine Schneide 5 oder 5' vorgesehen ist, durch Schlitze gegenüber dem Grundkörper 3 federelastisch beweglich sind. Bei dem hier dargestellten Ausführungsbeispiel ist vorgesehen, dass in die Stirnseite 11 eine Nut 19 eingebracht wird, so dass ein ringförmiger Wandbereich 21 außerhalb der Nut 19 gebildet wird, in den die Schneiden 5, 5' eingesetzt sind. Die Ausgestaltung des Wandbereichs 21 kann auf die verschiedenen Einsatzbereiche abgestimmt werden: Der Wandbereich 21 kann mit radialen Nuten und/oder Schlitzen versehen sein, um dessen Aufweitungsverhalten zu beeinflussen. Dabei ist es möglich, bestimmte Bereiche des Wandbereichs weicher auszugestalten, um eine radiale Verlagerung der Schneiden 5, 5' zu ermöglichen.

Das Werkzeug 1 ist mit einer Einstellvorrichtung 23 versehen, die dazu dient, die Schneiden 5, 5' in eine vorgegebene Position gegenüber der Mittelachse 25 des Werkzeugs 1 zu bringen. Die Einstellvorrichtung dient einerseits der exakten Ausgangseinstellung der Position der Schneiden 5, 5' gegenüber der Mittelachse 25 aber auch dazu, bei einem Verschleiß der Schneiden 5, 5' deren Position nachzustellen, um einen gewünschten Bearbeitungsdurchmesser des Werkzeugs 1 zu realisieren.

Die Einstellvorrichtung 23 weist ein gebogenes Einstellelement 27 auf. Bei dem hier dargestellten Ausführungsbeispiel ist das Einstellelement 27 konkav nach innen in einen Hohlraum 29 des Werkzeugs 1 gekrümmt. Das Einstellelement 27 wirkt mit einer Stellvorrichtung 31 zusammen, welche die Krümmung des Einstellelements 27 beeinflusst. Die Stellvorrichtung 31 weist hier eine Stellschraube 33 auf, die im Hohlraum 29 im Grundkörper 3 des Werkzeugs 1 untergebracht und über eine Ausnehmung 35 in dem Einstellelement 27 über die Stirnseite 11 zugänglich und mehr oder weniger weit in den Grundkörper 3 einschraubbar ist.

In einer ersten Funktionsstellung liegt die Stellschraube 33 an der dem Hohlraum 29 zugewandten Innenseite des Einstellelements 27 an. Wird die Stellschraube 33 in Rotation versetzt, so dreht sie sich um die Mittelachse 25 und führt -bei entsprechender Drehrichtung der Schraube- zu einer Beeinflussung der Biegung des Einstellelements 27. Wird beispielsweise die Stellschraube 33 entlang der Mittelachse 25 nach rechts verlagert, so wird die Biegung des Einstellelements 27 reduziert und der Wandbereich 21 aufgeweitet.

Um eine Veränderung der Biegung des Einstellelements 27 realisieren zu können, ist am Grundkörper 3, hier also am Wandbereich 21, ein Widerlager 37 vorgesehen, durch das das Einstellelement 27 am Grundkörper 3 so gehalten wird, dass eine axiale Verlagerung des Einstellelements 27 im Bereich des Widerlagers 37 vermieden wird.

Das Widerlager 37 kann durch einen von dem Wandbereich 21 nach innen in Richtung der Mittelachse 25 ragenden Vorsprung gebildet werden, der eine Verlagerung des Einstellelements 27 nach rechts, als aus dem Hohlraum 29 heraus verhindert.

Das Widerlager 37 kann auch dadurch realisiert werden, dass das Einstellelement 27 in eine umlaufende Nut, die in die Innenfläche des Wandbereichs 21 eingebracht wird, einschnappt. Schließlich ist es möglich, das Einstellelement 27 mit der Innenfläche des Wandbereichs 21 zu verschweißen, vorzugsweise in einem Laserschweißverfahren, was insbesondere bei kleinen Abmessungen des Werkzeugs 1 eine einfache Befestigung des Einstellelements 27 ermöglicht.

Bei dem in Figur 1 dargestellten Ausführungsbeispiel ist die Stellschraube 33 mit einem vorzugsweise als Feingewinde ausgebildeten Außengewinde versehen, das mit einem innerhalb der Nut 19 liegenden Wandabschnitt 39 zusammenwirkt, der ein entsprechendes Innengewinde umfasst. Die Stellschraube 33 ist außerdem mit einem Durchlass 41 versehen, der hier konzentrisch zur Mittelachse 25 angeordnet ist. Es ist damit grundsätzlich möglich, eine Kühl-/Schmiermittelzufuhr durch die Stellschraube 33 und durch die Ausnehmung 35 des Einstellelements 27 zu realisieren.

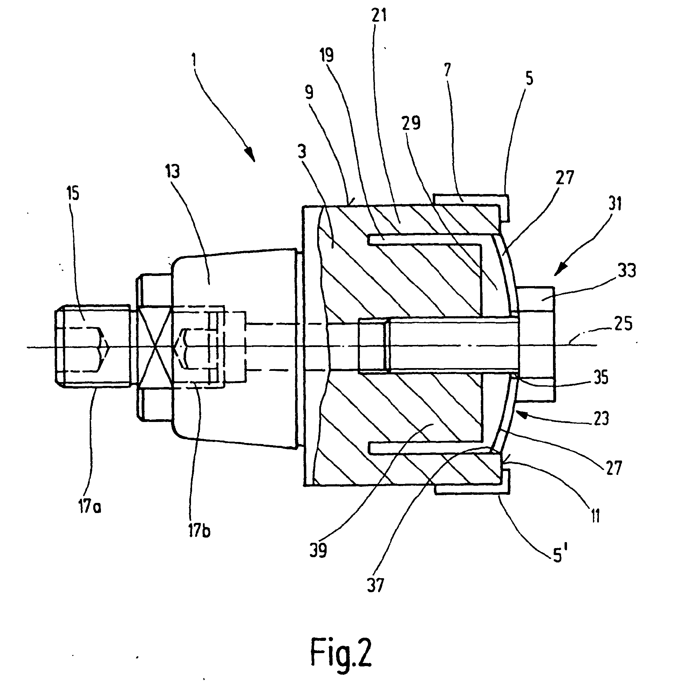

Figur 2 zeigt ein abgewandeltes Ausführungsbeispiel des Werkzeugs 1. Gleiche Teile sind mit gleichen Bezugsziffern versehen, so dass insofern auf die Beschreibung zu Figur 1 verwiesen wird.

Der Unterschied des Werkzeugs 1 gemäß Figur 2 liegt in der abweichenden Ausgestaltung des Einstellelements 27. Dieses ist hier konvex nach außen gewölbt, wobei es über die Stirnseite 11 hinausragt. Es ist jedoch möglich den Hohlraum 29 so tief auszugestalten, dass das Einstellelement gänzlich in diesem untergebracht werden kann. Das Einstellelement 27 wirkt mit einer Stellschraube 33 der Einstellvorrichtung 23 zusammen, die hier von außen, also von der dem Hohlraum 29 abgewandten Seite auf das Einstellelement 27 wirkt. Bei einer Verlagerung der Einstellschraube in Richtung der Mittelachse 25 nach links wird die Wölbung des Einstellelements reduziert, so dass dieses den Wandbereich 21 aufweitet und damit die Schneiden 5, 5' gegenüber der Mittelachse 25 nach außen verlagert.

Um die Funktion der Einstellvorrichtung 23 zu gewährleisten, stützt sich des Einstellelement 27 wiederum an einem Widerlager ab, das auf der Innenfläche des Wandbereichs 21 vorgesehen ist und eine Verlagerung des Einstellelements 27 in Richtung der Mittelachse 25 verhindert. Es ist ohne weiteres ersichtlich, dass als Widerlager ein in den Hohlraum 29 ragender Vorsprung vorgesehen werden kann, dass das Einstellelement 27 in eine in die Innenfläche des Wandbereichs 21 eingebrachte Nut eingreifen kann, und dass schließlich eine Schweißverbindung zwischen dem Einstellelement 27 und dem Grundkörper 3, das heißt hier mit dem Wandbereich 21 des Werkzeugs 1, vorgesehen werden kann. Dabei kann das Einstellelement 27 durchgehend im Berührungsbereich zwischen Einstellelement 27 und Grundkörper 3 verschweißt sein oder auch nur bereichsweise. Auch hier kann vorzugsweise ein Laserschweißverfahren eingesetzt werden.

Die Stellschraube 33 weist einen außen auf dem Einstellelement 27 aufliegenden Schraubenkopf und einen durch die Ausnehmung 35 im Einstellelement 27 ragenden Schraubenschaft auf, der in den Wandabschnitt 39 mit einem Außengewinde eingreift.

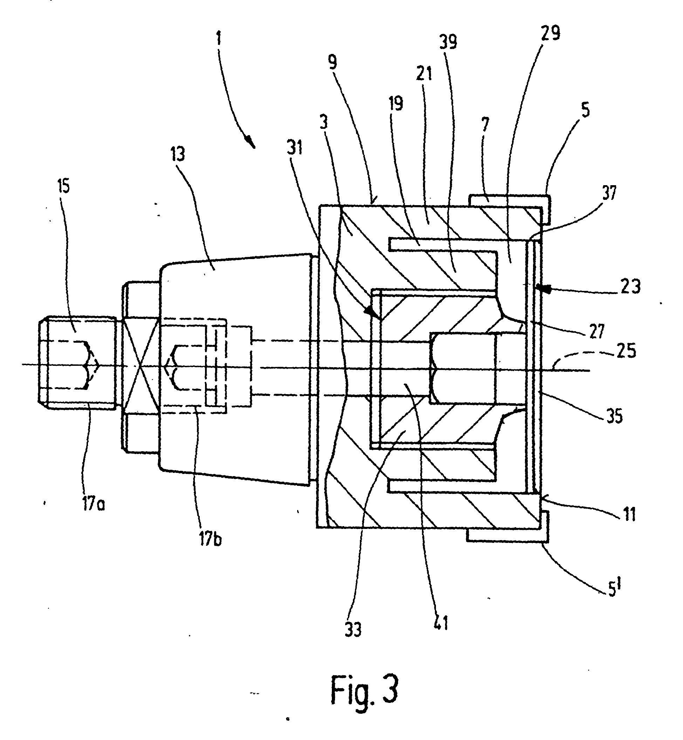

Figur 3 zeigt ein abgewandeltes Ausführungsbeispiele eines Werkzeugs 1, das im Wesentlichen übereinstimmt mit dem in Figur 1 dargestellten. Gleiche Bezugszeichen entsprechen gleichen Teilen, so dass insofern auf die Beschreibung zu Figur 1 verwiesen wird.

Der einzige Unterschied des in Figur 3 dargestellten Werkzeugs 1 besteht darin, dass die Einstellvorrichtung 23 ein ebenes Einstellelement 27 aufweist. Der Außendurchmesser des ebenen Einstellelements 27 ist so gewählt, dass die Schneiden 5, 5' der Messerplatten 7, 7' auf einem Außendurchmesser liegen, der größer ist als der bei Einsatz des Werkzeugs 1 gewünschte Außendurchmesser. Das Einstellelement 27 wird mit Hilfe der Stellvorrichtung 31 mehr oder weniger nach außen oder nach innen durchgebogen, so dass sich der Außendurchmesser des Einstellelements 27 vermindert und damit die Messerplatten 7; 7' und der Schneiden 5, 5' nach innen gezogen werden. Die Stellvorrichtung 31 wird so betätigt, dass das ursprünglich ebene Einstellelement 27 also so weit durchgebogen wird, bis die Schneiden 5; 5' auf dem gewünschten Solldurchmesser des Werkzeugs 1 liegen.

Ist der gewünschte Außendurchmesser des Werkzeugs 1 durch Einstellung der Schneiden 5, 5' durch die Durchbiegung des ursprünglich ebenen Einstellelements 27 einmal erreicht, so ist ein Nachstellen bei Verschleiß der Schneiden 5, 5' dadurch möglich, dass der Grad der Durchbiegung des Einstellelements vermindert wird, so dass die Schneiden 5, 5' durch das Einstellelement 27 nach außen gedrängt werden, bis der gewünschte Solldurchmesser des Werkzeugs 1 wiedergegeben ist.

Es ist selbstverständlich auch möglich, ein ebenes Einstellelement 27 auch in Verbindung mit dem in Figur 2 dargestellten Ausführungsbeispiel zu verwenden, also eine von außen auf das Einstellelement 27 wirkende Stellschraube 33 vorzusehen.

Es zeigt sich also, dass ein ebenes Einstellelement 27 sowohl mit einer von innen wirkenden Stellschraube 33 in seiner Biegung verändert werden kann, wie dies anhand von Figur 1 und 3 erläutert wurde, als auch von einer außen liegenden Stellschraube 33, die anhand von Figur 2 beschrieben wurde. Es ist also nicht erforderlich, dass die Einstellvorrichtung 23 ein von Anfang an durchgebogenes Einstellelement 27 aufweist. Es ist also auch denkbar, ein ebenes Einstellelement 27 zu verwenden, wie dies anhand von Figur 3 erläutert wurde. In diesem Fall ist es allerdings erforderlich, den Außendurchmesser des Einstellelements 27 so zu wählen, dass die Schneiden 5, 5' zunächst auf einem Übermaß angeordnet sind und erst durch die Durchbiegung des Einstellelements 27 auf das gewünschte Sollmaß gebracht werden.

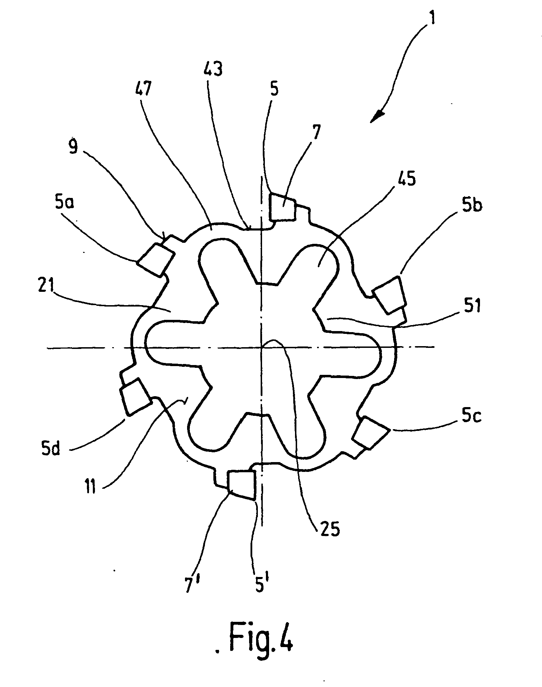

Figur 4 zeigt schematisch eine mögliche Ausführungsform des Wandbereichs 21 in Draufsicht auf die Stirnseite 11 des Wandbereichs 21. Aus Gründen der besseren Übersichtlichkeit ist hier die Einstellvorrichtung 23 weggelassen.

Figur 4 zeigt, dass außer den Schneiden 5 und 5' an den Messerplatten 7 und 7' weitere Schneiden 5a, 5b, 5c, 5d vorgesehen sein können, die die Umfangsfläche 9 des Werkzeugs in radialer Richtung überragen und gegenüber der Mittelachse 25 eine definierte Position einnehmen. Der Wandbereich 21 kann zusätzlich oder anstelle einer oder einiger Schneiden mit mindestens einer Führungsleiste versehen sein, die hier nicht dargestellt ist.

Der Wandbereich 21 ist von außen mit Vertiefungen vorgesehen, die als Spanraum 43 dienen, wobei jeder Schneide ein Spanraum zum Abtransport der bei der Bearbeitung eines Werkstücks entstehenden Späne zugeordnet ist. Von innen sind hier mehrere Ausnehmungen 45 in den Wandbereich 21 eingebracht, die jeweils zwischen zwei Schneiden 5, 5b und 5b, 5c und 5c, 5' und 5', 5d und 5d, 5a und 5a, 5 liegen. Damit werden relativ dünne Verbindungsbereiche 47 zwischen benachbarten Schneiden beziehungsweise Messerplatten gebildet, die eine radiale Verlagerung der Messerplatten beziehungsweise Schneiden gegenüber der Mittelachse 25 erlauben.

Aus den Darstellungen gemäß den Figuren 1 und 2 wird deutlich, dass die Einstellvorrichtung 23 ein gebogenes Einstellelement 27 aufweist, dessen Biegung durch eine Stellvorrichtung 31 beeinflussbar ist. Diese weist hier eine Stellschraube 33 auf, die nahe der Mittelachse 25 auf das Einstellelement 27 einwirkt. Vorzugsweise ist die Berührungsfläche der Stellschraube 33, 33' auf die Berührungsfläche des Einstellelements 27 abgestimmt, um eine punktförmige Berührung zu vermeiden. Aus den Figuren 1 und 2 ist ersichtlich, dass bei einer Verlagerung der Stellschraube 33 die Biegung des Einstellelements reduziert werden kann, wobei eine axiale Verlagerung des Einstellelements 27 in Richtung der Mittelachse 25 durch eine Festlegung des Einstellelements 27 am Grundkörper 3 im Bereich des Widerlagers 37 verhindert wird. Bei einer Reduzierung des Biegeradius' des Einstellelements 27 vergrößert sich dessen in den Figuren senkrecht zur Mittelachse 25 gemessene Ausdehnung, so dass eine Aufweitung des Grundkörpers 3 des Werkzeugs 1, hier also des Wandbereichs 21, erfolgt und die radiale Position der Schneiden 5, 5' gegenüber der Mittelachse 25 verändert wird: Die Schneiden 5, 5' werden radial nach außen verlagert. Die Funktion der Einstellvorrichtung 23 mit einem ebenen Einstellelement 27 wurde anhand von Figur 3 erläutert. Hier wird also das ebene Einstellelement 27 verbogen, um die gewünschte Position der Schneiden 5; 5' einzustellen.

Das Einstellelement 27 wird vorzugsweise aus Federstahl hergestellt. Die Veränderung der Biegung ist insbesondere bei der Feineinstellung der Position der Schneiden 5, 5' so gering, dass der Werkzeugkörper, hier also der Wandbereich 21, und das Einstellelement 27 nur elastisch verformt werden so dass eine reversible Verformung des Einstellelements 27 und des Wandbereichs 21 gegeben ist. Wird also durch Verlagerung der Stellschraube 33, 33' die Biegung zunächst reduziert, also der Wandbereich 21 aufgeweitet, so ist durch Rückverlagerung der Stellschraube 33 auch eine Erhöhung der Biegung des Einstellelements 27 und damit eine Rückverlagerung der Schneiden 5, 5' möglich. Die reversible Verlagerung der Schneiden 5, 5', die auch bei dem Ausführungsbeispiel in Figur 3 gegeben ist, beruht also auf den Federeigenschaften des Einstellelements 27, das letztlich wie ein Biegebalken wirkt. Es ist aber auch möglich, die Einstellschraube doppelwirkend mit dem Einstellelement zu koppeln. Es ist also denkbar, bei entsprechender Kopplung zwischen Einstellschraube und Einstellelement eine Erhöhung der Biegung des Einstellelements zu bewirken, also eine Verkleinerung des Biegeradius'. Damit können die Schneiden 5, 5' auch aktiv durch die Einstellvorrichtung 23 nach innen in Richtung auf die Mittelachse 25 verlagert werden. Grundsätzlich ist aber davon auszugehen, dass schon aus Gründen des einfachen Aufbaus der Einstellvorrichtung 23 bei den Ausführungsbeispielen der Figuren 1 und 2 lediglich eine Reduzierung der Biegung des Einstellelements 27 mittels der Stellvorrichtung 31 vorgesehen ist.

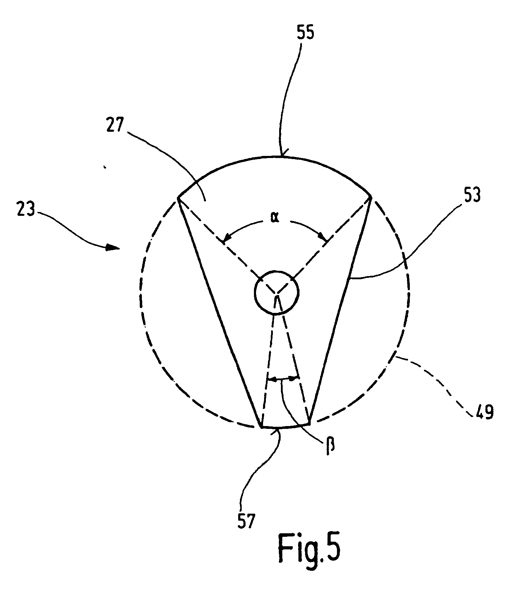

Figur 5 zeigt schematisch eine Draufsicht auf ein Einstellelement 27 einer Einstellvorrichtung 23. Das Einstellelement 27 ist, was aus Figur 5 nicht ersichtlich wird, entweder konkav in die Bildebene hineingewölbt oder konvex aus der Bildebene herausgewölbt. Es ist aber auch hier ein ebenes Einstellelement - wie anhand von Figur 3 erläutert - verwendbar. Das Einstellelement 27 kann als kreisrunde Scheibe ausgebildet sein, was durch eine punktierte Linie 49 angedeutet wird. Die Größe des Einstellelements 27 hängt von den Dimensionen des Wandbereichs 21 ab. Betrachtet man beispielsweise Figur 4, so sieht man zwischen den Ausnehmungen 45 dickere Wandabschnitte 51, die den kleinsten Innendurchmesser des Wandbereichs 21 definieren. Wird also ein Einstellelement 27 gemäß Figur 5 in ein Werkzeug 1 eingesetzt, dessen Wandbereich gemäß Figur 4 ausgebildet ist, so wäre der Außendurchmesser des Einstellelements 27 durch den kleinsten Innendurchmesser des Wandbereichs 21, insbesondere durch den Innendurchmesser der Wandabschnitte 51 festgelegt.

Das Einstellelement 27 kann bei entsprechender Ausgestaltung des Wandbereichs 21 im gesamten Umfangsbereich am Wandbereich 21 befestigt, insbesondere festgeschweißt sein, so dass eine umlaufende Schweißnaht das Widerlager 37 bildet. Kombiniert man ein scheibenförmiges Einstellelement 27 mit einem Werkzeug 1, das einen Wandbereich 21 gemäß Figur 4 hat, so ergeben sich bei entsprechender Durchmesserabstimmung lediglich im Bereich der Wandabschnitte 51 Berührungsbereiche zwischen dem Wandbereich 21 und einem scheibenförmigen Einstellelement 27. Zumindest in einigen dieser Berührungsbereiche müsste ein Widerlager 37 ausgebildet werden, um eine axiale Verlagerung des Einstellelements 27 in Richtung der Mittelachse 25 bei Aktivierung der Stellvorrichtung 31 zu verhindern. Vorzugsweise ist das Einstellelement 27 jeweils im Bereich der Wandabschnitte 51 mit dem Grundkörper 3 des Werkzeugs 1 verbunden, damit also im Bereich der Schneiden 5, 5a, 5b, 5c, 5d, 5', so dass bei einer Aktivierung der Einstellvorrichtung 23 gerade hier radial nach außen oder innen wirkende Kräfte in den Wandbereich 21 eingeleitet werden, um die Position der Schneiden zu beeinflussen.

In Figur 5 ist mit durchgezogenen Linien 53 eine von der Scheibenform abweichende Ausgestaltung des Einstellelements 27 dargestellt. Die Oberkante 55 des Einstellelements 27 erstreckt sich über einen Kreisbogen mit einem von der Mittelachse 25 aus gemessenen Öffnungswinkel α von zirka 90°. Die Unterkante 57 erstreckt sich über einen Kreisbogen, der einem Öffnungswinkel β von etwas mehr als 20° entspricht. Die entlang der Kreislinie gesehene Erstreckung der Oberkante 55 beziehungsweise Unterkante 57 ist frei wählbar und auf verschiedene Ausgestaltungen des Werkzeugs 1 abstimmbar. Es ist also möglich, bei Betätigung der Einstellvorrichtung 23 gezielt nur Abschnitte des Wandbereichs 21 mit einer Einstellkraft zu beaufschlagen, die der Oberkante 55 beziehungsweise der Unterkannte 57 entsprechen.

Es ist beispielsweise auch möglich, ein quasi sternförmiges Einstellelement 27 vorzusehen, das den Wandbereich 21 lediglich im Bereich der Wandabschnitte 51 berührt und nur diese mit einer Einstellkraft beaufschlagt.

Entscheidend ist allein, dass das gebogene oder ebene Einstellelement 27 unter Einwirkung der Stellschraube 33 seinen Biegeradius verändern kann und damit radial nach außen oder auch nach innen wirkende Kräfte auf den Wandbereich 21 und die darin untergebrachten Schneiden ausübt.

Aus Figur 5 und den zugehörigen Erläuterungen ist ersichtlich, dass das Einstellelement 27 frei ausgestaltet werden kann. Es ist also möglich, eine Außenkontur des Einstellelements 27 und eine angepasste Innenkontur am Grundkörper 3, insbesondere am Wandbereich 21, vorzusehen, um eine unterschiedliche Verlagerung der Schneiden (siehe beispielsweise Figur 4) zu bewirken. Bei einer Aktivierung der Einstellvorrichtung 23 können also die Schneiden verschieden weit radial verlagert werden. Es ist damit möglich, eine einzelne oder einige der Schneiden stärker nach außen zu verlagern. Schneiden, die weniger weit nach außen verlagert werden, können bei der Bearbeitung eines Werkstücks die Grobzerspanung vornehmen, während die weiter nach außen stehenden Schneiden der Fertigbearbeitung der Werkstückoberfläche dienen.

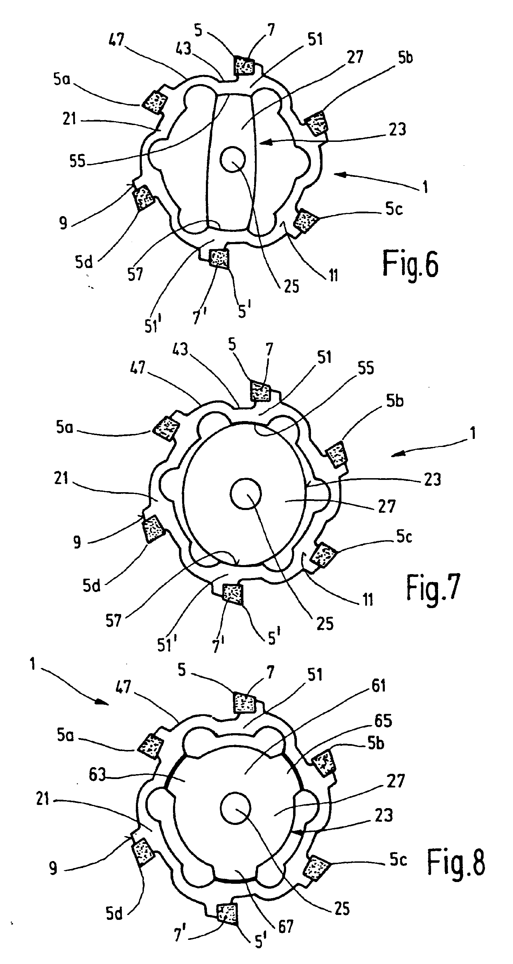

Figur 6 zeigt ein weiteres Ausführungsbeispiel eines in ein Werkzeug 1 eingesetzten Einstellelements 27. Der Wandbereich 21 wurde insbesondere anhand von Figur 4 näher erläutert. Gleiche Teile sind mit gleichen Bezugsziffern versehen, so dass auf die Beschreibung zu den vorangegangenen Figuren verwiesen wird.

Der Wandbereich 21 ist insgesamt dünner ausgebildet, als der anhand von Figur 4 erläuterte. Entscheidend ist aber auch hier, dass in den Wandbereich 21 Messerplatten mit Schneiden 5, 5a, 5b, 5c, 5d und 5' eingesetzt sind, die durch Verbindungsbereiche 47 mit reduzierter Wandstärke voneinander getrennt sind. Die Messerplatten 7 und 7', die in Figur 6 oben und unten angeordnet sind, sind mittels des Einstellelements 27 verlagerbar. Dieses weist eine kreisbogenförmig ausgebildete Oberkante 55 und eine entsprechend ausgebildete Unterkante 57 auf. Es berührt den Wandbereich 21, nämlich die Wandabschnitte 51, 51', nur mit den relativ schmal ausgebildeten Ober- und Unterkanten 55, 57, so dass bei einer Aktivierung des Einstellelements 27 nur die den Schneiden 7 und 7' zugeordneten Wandabschnitte 51 und 51' in ihrer radialen Position verändert werden.

Das Einstellelement 27 der Einstellvorrichtung 23 ist relativ schmal, praktisch streifenförmig ausgebildet, so dass die von der Einstellvorrichtung 23 aufbringbaren Einstellkräfte durch die Breite des Einstellelements 27 begrenzt sind.

Figur 7 zeigt ein weiteres Ausführungsbeispiel einer Einstellvorrichtung 23 mit einem Einstellelement 27, das in einen Wandbereich 21 eines Werkzeugs 1 eingebracht ist. Teile, die mit vorangegangenen Teilen übereinstimmen, sind mit gleichen Bezugsziffern versehen. Insofern wird also auf die Beschreibung zu den vorangegangenen Figuren verwiesen.

Der einzige Unterschied gegenüber dem in Figur 6 gezeigten Ausführungsbeispiel besteht darin, dass das Einstellelement 27 der Einstellvorrichtung 23 im Wesentlichen oval, hier elliptisch ausgebildet ist, wobei der größere Durchmesser der Ellipse senkrecht und der kleinere Durchmesser horizontal angeordnet ist. Das Einstellelement 27 weist damit eine Oberkante 55 auf, die unter einem Radius gekrümmt ist, der dem Krümmungsradius der Innenfläche des Wandabschnitts 51 angeglichen ist, über dem die Schneide 5 der Messerplatte 7 angeordnet ist. Symmetrisch ist unten am Einstellelement 27 eine gekrümmte Unterkante 57 vorgesehen, die den Wandabschnitt 51' des Wandbereichs 21 berührt, in den die Messerplatte 7'mit der Schneide 5' eingebracht ist.

Es ist ohne Weiteres ersichtlich, dass auch das in Figur 7 dargestellte Einstellelement 27 den Wandbereich 21 auf dessen Innenfläche lediglich in den Wandabschnitten 51 und 51' berührt, so dass nur diese bei einer Betätigung des Einstellelements 27 radial nach außen -und gegebenenfalls nach innenbewegt werden. Die den übrigen Schneiden 5a, 5b, 5c und 5d zugeordneten Wandabschnitte werden von dem Einstellelement 27 nicht berührt und bei dessen Aktivierung auch nicht in ihrer Position verändert.

Figur 8 zeigt ein weiteres Ausführungsbeispiel eines Einstellelements 27. Gleiche Teile sind auch hier mit gleichen Bezugsziffern versehen, so dass auf die vorangegangenen Erläuterungen verwiesen wird.

Das Einstellelement 27 der Einstellvorrichtung 23 weist hier einen im Wesentlichen kreisrunden Grundkörper 61, der eine Anzahl von Vorsprüngen 63, 65 und 67 umfasst. Die Anzahl und Anordnung der Vorsprünge kann an das gewünschte Einstellverhalten der Einstellvorrichtung 23 angepasst werden. Bei dem hier dargestellten Ausführungsbeispiel weist der Wandabschnitt 21 des Werkzeugs 1 sechs Schneiden 5, 5b, 5c, 5', 5d und 5a auf. Die Vorsprünge 63, 65 und 67 sind so angeordnet, dass diese bei einer Aktivierung der Einstellvorrichtung 23 lediglich die radiale Position der Schneiden 5a, 5b und 5' beeinflusst. Dazu weisen die Vorsprünge jeweils eine abgerundete Außenkante auf, die an die Innenfläche des Wandelements 21, insbesondere der Wandabschnitte 51 angepasst ist, die den Schneiden 5a, 5b und 5' zugeordnet sind.

Die in den Figuren 6, 7 und 8 dargestellten Einstellelemente 27 sind im Berührungsbereich mit dem Wandbereich 21 mit diesem verbunden, beispielsweise verschweißt, so dass hier jeweils Widerlager 37 ausgebildet werden, an denen sich das Einstellelement 27 der Einstellvorrichtung 23 abstützt.

Es wird deutlich, dass durch die Ausgestaltung des Einstellelements gezielt einzelne oder mehrere Schneiden des Werkzeugs 1 in ihrer radialen Position gegenüber der Mittelachse 25 einstellbar sind. Durch die verschiedene Ausgestaltung des Einstellelements 27 werden auch unterschiedliche Einstellkräfte ausgeübt: Beispielsweise zeigt der Vergleich der Figuren 6 und 7 dass das Einstellelement 27 verschieden breit ausgebildet sein kann, so dass auch die Einstellkräfte variabel sind.

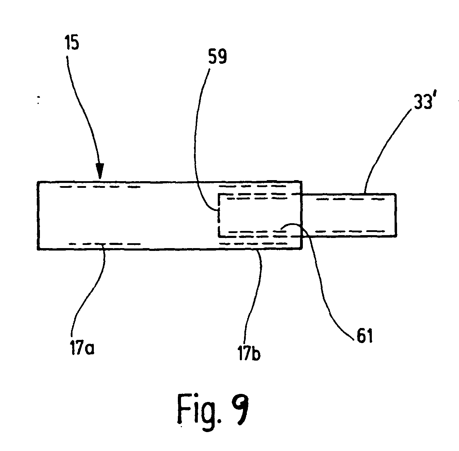

Figur 9 zeigt ein abgewandeltes Ausführungsbeispiel der in Figur 1 dargestellten und beschriebenen Spanschraube 15. Diese kann die gegenläufigen Gewindeabschnitte 17a und 17b aufweisen. Sie ist mit einer Ausnehmung 59 versehen, in die eine Stellschraube 33' eingebracht ist. Diese ist mit einem Außengewinde 61 versehen, das mit einem Innengewinde der Ausnehmung 59 kämmt. Die Stellschraube ist, wie bei Figur 1 erläutert, durch eine Ausnehmung 35 im Einstellelement 27 erreichbar und kann mehr oder weniger weit in die Spannschraube 15 eingeschraubt werden. Durch die Verlagerung der Stellschraube 33' kann eine Beeinflussung der Biegung des Einstellelements 27 bei entsprechender Länge der Stellschraube 33' vorgenommen werden. Dabei ist es möglich, die Stellschraube 33' auf der Außenseite mit gegenläufigen Gewindeabschnitten zu versehen, von denen einer mit einem Innengewinde im Bereich der Ausnehmung 35 des Einstellelements 27 zusammenwirkt, um eine zwangsweise Bewegung des Einstellelements 27 sowohl zur Verkleinerung des Biegeradius' als auch zu einer Vergrößerung des Biegeradius' zu gewährleisten.

Das in Figur 9 dargestellte Ausführungsbeispiel zeichnet sich dadurch aus, dass die Stellvorrichtung 31 an verschiedene Ausführungsbeispiele eines Werkzeugs angepasst werden kann: Je nach Anordnung des Einstellelements 27 können mehr oder weniger lange Stellschrauben 33' in die Spannschraube 15 eingesetzt werden. Außerdem kann bei einer Beschädigung der Stellschraube 33' diese leicht ausgetauscht werden, weil sie, anders als bei dem Ausführungsbeispiel gemäß Figur 1, auch nach Befestigung des Einstellelements 27 am Grundkörper 3 des Werkzeugs 1 zugänglich bleibt: Es bedarf lediglich der Entfernung der Spannschraube 15, um an die Stellschraube 33' heranzukommen und um diese auszutauschen.

Insgesamt zeigt sich, dass das Werkzeug 1 und dessen Einstellvorrichtung 23 kompakt und einfach aufgebaut sind. Zur Einstellung der radialen Position einer oder mehrerer Messerplatten bedarf es weniger Teile. Dabei treten bei der Verlagerung des Einstellelements 27 in diesem keine Reibungskräfte auf. Bei der Einstellung der Schneiden findet also ausschließlich eine Verformung des Einstellelements statt und keine Relativbewegung desselben gegenüber dem Grundkörper des Werkzeugs. Es entfällt also das bei herkömmlichen Werkzeugen vorgesehene Keilgetriebe. Dies begünstigt eine sehr feinfühlige und gleichmäßige Einstellung der Schneiden, wobei auch hier unterschiedliche Verlagerungswege der Schneiden realisierbar sind. Es ist außerdem möglich, die Einstellung reversibel durchzuführen, also auch eine Rückverlagerung der Schneiden mit ein und demselben Einstellelement zu bewirken. Dabei ist das Werkzeug robust und einfach aufgebaut, also kostengünstig realisierbar.

Das Einstellelement 27 ist an verschiedenste Ausführungsformen des Werkzeugs 1 anpassbar. Dieses kann eine oder mehrere Schneiden und auch eine oder mehrere Führungsleisten aufweisen. Die bei der Einstellung zu verlagernden Abschnitte des Wandbereichs 21 können durch entsprechende Ausgestaltung des Einstellelements 27 speziell gewählt werden, was aus den Erläuterungen zu den Figuren 4 und 5 besonders deutlich wird. In allen Fällen ist eine sehr feinfühlige Einstellung dadurch möglich, dass die Stellschraube 33, 33' mit einem Feingewinde versehen werden kann, so dass das Werkzeug und die zugehörige Einstellvorrichtung 23 auch bei der Fein- und Feinstbearbeitung von Werkstücken einsetzbar sind.

Besonders vorteilhaft ist noch, dass die Einstellvorrichtung 23 vorzugsweise so ausgelegt werden kann, dass das Einstellelement 27 nur reversibel verformt wird, damit ohne großen Aufwand eine Rückverlagerung der Schneiden und Messerplatten möglich ist. Außerdem ist der Verschleiß der Einstellvorrichtung 23 sehr gering, so dass sie eine hohe Haltbarkeit ergibt.

## Patentansprüche

1. Werkzeug zur spanenden Bearbeitung von Werkstücken mit einem zumindest bereichsweise aufweitbarem Grundkörper, mindestens einer über eine Umfangsfläche des Werkzeugs vorspringenden, geometrisch definierten Schneide und mit einer den der radialen Abstand der Schneide zur Mittelachse des Werkzeugs beeinflussenden Einstellvorrichtung, **dadurch gekennzeichnet, dass** die Einstellvorrichtung (23) ein biegsames Einstellelement (27) und eine die Biegung des Einstellelements (27) verändernde Stellvorrichtung (31) aufweist, und dass das Einstellelement (27) so in den Grundkörper (3) des Werkzeugs (1) eingebracht ist, dass bei einer Veränderung der Biegung des Einstellelements (27) der radiale Abstand der Schneide (5,5',5a bis 5d) verändert wird.

2. Werkzeug nach Anspruch 1, **dadurch gekennzeichnet, dass** das Einstellelement (27) ohne Beeinflussung durch die Stellvorrichtung (31) eben ist.

3. Werkzeug nach Anspruch 1, **dadurch gekennzeichnet, dass** das Einstellelement (27) ohne Beeinflussung durch die Stellvorrichtung (31) gebogen ist.

4. Werkzeug nach einem der vorhergehenden Ansprüche, **dadurch gekennzeichnet, dass** der Grundkörper (3) des Werkzeugs (1) ein eine Verlagerung des Einstellelements (27) in Richtung der Mittelachse (25) verhinderndes Widerlager (37) aufweist, an dem sich das Einstellelement (27) bei Betätigung der Stellvorrichtung (31) abstützt.

5. Werkzeug nach einem der vorhergehenden Ansprüche, **dadurch gekennzeichnet, dass** das Widerlager (37) durch eine Schweißverbindung zwischen Einstellelement (27) und Grundkörper (3) realisierbar ist.

6. Werkzeug nach einem der vorhergehenden Ansprüche, **dadurch gekennzeichnet, dass** das Einstellelement (27) aus Federstahl besteht.

7. Werkzeug nach einem der vorhergehenden Ansprüche, **dadurch gekennzeichnet, dass** das Einstellelement (27) eine oder mehrere Schneiden des Werkzeugs (1) beeinflusst.

8. Werkzeug nach einem der vorhergehenden Ansprüche, **dadurch gekennzeichnet, dass** durch das Einstellelement (27) der radiale Abstand der Schneide (5,5',5a bis 5d) vergrößer- und verkleinerbar ist.

9. Werkzeug nach einem der vorhergehenden Ansprüche, **dadurch gekennzeichnet, dass** ein und dasselbe Einstellelement sowohl der Vergrößerung als auch der Verkleinerung des radialen Abstands der Schneide (5,5',5a bis 5d) dient.

10. Werkzeug nach einem der vorhergehenden Ansprüche, **dadurch gekennzeichnet, dass** die Stellvorrichtung (31) eine Stellschraube (33,33') umfasst.

11. Werkzeug nach Anspruch 10, **dadurch gekennzeichnet, dass** die Stellvorrichtung (31) eine mit einer Spannschraube (15) kombinierbare Stellschraube (33') umfasst.

## Claims

1. Tool for machining by chip-forming of workpieces with a basic member which can be expanded at least in certain regions, at least one geometrically defined cutting edge protruding beyond a circumferential surface of the tool and with a setting device which influences the radial distance of the cutting edge from the centre axis of the tool, **characterized in that** the setting device (23) has a bendable setting element (27) and an adjusting device (31) which alters the bending of the setting element (27), and **in that** the setting element (27) is introduced into the basic member (3) of the tool (1) in such a way that in the event of an alteration of the bending of the setting element (27) the radial distance of the cutting edge (5, 5', 5a to 5d) is altered.

2. Tool according to claim 1, **characterized in that** the setting element (27) is planar without influencing by the adjusting device (31).

3. Tool according to claim 1, **characterized in that** the setting element (27) is bent without influencing by the adjusting device (31).

4. Tool according to any one of the preceding claims, **characterized in that** the basic member (3) of the tool (1) has an abutment (37) which prevents displacement of the setting element (27) in the direction of the centre axis (25) and on which the setting element (27) is supported on actuation of the adjusting device (31).

5. Tool according to any one of the preceding claims, **characterized in that** the abutment (37) can be produced by a welded connection between the setting element (27) and basic member (3).

6. Tool according to any one of the preceding claims, **characterized in that** the setting element (27) consists of spring steel.

7. Tool according to any one of the preceding claims, **characterized in that** the setting element (27) influences one or more cutting edges of the tool (1).

8. Tool according to any one of the preceding claims, **characterized in that** the setting element (27) can be used to increase and reduce the radial distance of the cutting blade (5, 5', 5a to 5d).

9. Tool according to any one of the preceding claims, **characterized in that** one and the same setting element serves both to increase and to reduce the radial distance of the cutting blade (5, 5', 5a to 5d).

10. Tool according to any one of the preceding claims, **characterized in that** the adjusting device (31) comprises an adjusting screw (33, 33').

11. Tool according to claim 10, **characterized in that** the adjusting device (31) comprises an adjusting screw (33') which can be combined with a clamping screw (15).

## Revendications

1. Outil d'usinage par enlèvement de copeaux de pièces, comprenant un corps de base pouvant être élargi au moins par endroits, au moins un tranchant défini géométriquement, faisant saillie d'une surface circonférentielle de l'outil, et un dispositif d'ajustement influençant la distance radiale entre le tranchant et l'axe médian de l'outil, **caractérisé en ce que** le dispositif d'ajustement (23) présente un élément d'ajustement (27) flexible et un dispositif de réglage (31) qui modifie la courbure de l'élément d'ajustement (27) et **en ce que** l'élément d'ajustement (27) est monté dans le corps de base (3) de l'outil (1) de telle manière que la distance radiale du tranchant (5, 5', 5a à 5d) est modifiée lors d'une modification de la courbure de l'élément d'ajustement (27).

2. Outil selon la revendication 1, **caractérisé en ce que** l'élément d'ajustement (27) est plan quand le dispositif de réglage (31) n'influe pas sur lui.

3. Outil selon la revendication 1, **caractérisé en ce que** l'élément d'ajustement (27) est courbe quand le dispositif de réglage (31) n'influe pas sur lui.

4. Outil selon l'une quelconque des revendications précédentes, **caractérisé en ce que** le corps de base (3) de l'outil (1) présente un appui (37) qui empêche un déplacement de l'élément d'ajustement (27) en direction de l'axe médian (25) et sur lequel s'appuie l'élément d'ajustement (27) lors de l'actionnement du dispositif de réglage (31).

5. Outil selon l'une quelconque des revendications précédentes, **caractérisé en ce que** l'appui (37) est réalisable par un joint soudé entre élément d'ajustement (27) et corps de base (3).

6. Outil selon l'une quelconque des revendications précédentes, **caractérisé en ce que** l'élément d'ajustement (27) est réalisé en acier pour ressorts.

7. Outil selon l'une quelconque des revendications précédentes, **caractérisé en ce que** l'élément d'ajustement (27) influe sur un ou plusieurs tranchants de l'outil (1).

8. Outil selon l'une quelconque des revendications précédentes, **caractérisé en ce que** l'élément d'ajustement (27) permet d'augmenter et de diminuer la distance radiale du tranchant (5, 5', 5a à 5d).

9. Outil selon l'une quelconque des revendications précédentes, **caractérisé en ce qu'**un seul et même élément d'ajustement sert aussi bien à augmenter qu'à diminuer la distance radiale du tranchant (5, 5', 5a à 5d).

10. Outil selon l'une quelconque des revendications précédentes, **caractérisé en ce que** le dispositif de réglage (31) comprend une vis de réglage (33, 33').

11. Outil selon la revendication 10, **caractérisé en ce que** le dispositif de réglage (31) comprend une vis de réglage (33') pouvant être combinée avec une vis de serrage (15).
